Europäisches Patentamt

(19) European Patent Office

Office européen des brevets

(11) Publication number: **0 030 853**
**B1**

(12) **EUROPEAN PATENT SPECIFICATION**

(45) Date of publication of patent specification: **12.09.84**

(21) Application number: **80304489.0**

(22) Date of filing: **12.12.80**

(51) Int. Cl.³: **C 09 K 11/18,** C 09 K 11/46, H 01 J 29/20

(54) **Phosphor and method of manufacturing the phosphor.**

(30) Priority: **12.12.79 JP 160324/79**
**06.02.80 JP 12501/80**
**18.08.80 JP 112740/80**

(43) Date of publication of application:
**24.06.81 Bulletin 81/25**

(45) Publication of the grant of the patent:
**12.09.84 Bulletin 84/37**

(84) Designated Contracting States:
**DE FR GB NL**

(56) References cited:
**FR-A- 946 055**
**FR-A-1 160 697**
**GB-A-1 109 739**
**GB-A-1 121 055**
**GB-A-1 467 010**
**GB-A-1 469 230**
**GB-A-1 522 368**
**US-A-2 485 903**
**US-A-3 898 174**
**US-A-3 925 240**

(73) Proprietor: **Hitachi, Ltd.**
**5-1, Marunouchi 1-chome**
**Chiyoda-ku Tokyo 100 (JP)**

(72) Inventor: **Kasano, Hiroyuki**
**4-5-21 Matsubara-cho**
**Akishima-shi Tokyo (JP)**
Inventor: **Megumi, Koichi**
**4-39-16 Akatsuka**
**Itabashi-ku Tokyo (JP)**
Inventor: **Yamamoto, Hajime**
**3-15-6 Higashi-koigakubo**
**Kokubunji-shi Tokyo (JP)**

(74) Representative: **Paget, Hugh Charles Edward**
**et al**
**MEWBURN ELLIS & CO. 2/3 Cursitor Street**
**London EC4A 1BQ (GB)**

(56) References cited:
**US-A-3 950 668**
**US-A-4 116 864**

**J. Applied Chemistry and Biotechnology 21, No. 8 pp. 233-5.**

Courier Press, Leamington Spa, England.

# 0 030 853

**Description**

This invention relates to a phosphor, especially one suitable for use in colour picture tubes and a method of manufacturing the phosphor. The invention further relates to a cathode ray tube, e.g. a colour picture tube, particularly a tube which is excited by a high density current.

It is known that phosphors of alkaline-earth metal sulfides activated with rare earths or transition metals, especially the phosphors of the CaS and SrS types, emit light at high efficiency when excited by an electron beam. In particular, phosphors activated with Eu and phosphors activated with both Eu and Ce are red-emitting phosphors, whose main emission peaks lie at 650—653 nm (CaS type) or 609—612 nm (SrS type). On the other hand, phosphors activated with Ce are green-emitting, having main emission peaks at 520—523 nm (CaS type) or 503—506 nm (SrS type). It is also known that, for the phosphors of the (Ca . Sr)S type, the main emission peaks lie midway between those of the CaS type and the SrS type phosphors.

Japanese Patent Application Publication No. 47-38747, discloses the doping of these phosphors with the halogen elements (Cl, Br, I) in order to increase brightness. These halogen elements are called "coactivators" and they do not emit light by themselves but function to enhance the light emission of $Eu^{2+}$ or $Ce^{3+}$. $Ce^{3+}$ emits light by itself, but when it is used jointly with $Eu^{2+}$, it plays the role of increasing the light emission of $Eu^{2+}$, and it is called a "sensitizer".

An attempt to dope the alkaline-earth metal sulfide phosphors with P for the same purpose of enhancing brightness is also disclosed in the publication mentioned above.

However, the effects of these measures in enhancing brightness are not yet satisfactory.

In ordinary cathode-ray tubes for display, a phosphor applied on a screen is excited by an electron beam at a current density of approximately 1 mA/cm² in order to achieve a practical level of brightness. The phosphor used for such cathode-ray tubes is chiefly ZnS:Cu, Al (Zinc sulfide activated with copper and aluminum) or (Zn, Cd)S:Ag for green, and its energy efficiency reaches 21—22 % and its luminous efficiency 6—7 lm/W at this current density. In colour picture tubes, $Y_2O_2S$:Eu (energy efficiency: 12—13 %) is employed as a red phosphor and ZnS:Ag, Cl (energy efficiency: 20—23 %) as a blue phosphor, in addition to the abovementioned green phosphor. In colour picture tubes, luminous efficiency when white created is limited to approximately 3 lm/W on account of, principally, the lack of the brightness of the red phosphor.

In recent years, cathode-ray tubes which are excited by currents at high densities of approximately 100 mA/cm² have been developed in order to obtain television pictures which are of especially high brightness or large area. It is known that, when the phosphors for the ordinary tubes described above are used in such high-current-density tubes, efficiencies are conspicuously lower in the high current density region, with the result that brightness is saturated. Such saturation is particularly noticeable in the green phosphor, and secondly is noticeable in the blue phosphor. By way of example, when the green phosphor (Zn, Cd)S:Ag is excited by a pulsed electron beam having an acceleration voltage of 10 kV and a pulse duration of 10 $\mu$sec, its energy efficiency (which is taken as 100 at a current density of $10^{-4}$ A/cm²) is about 10 at a current density of 100 mA/cm².

Some phosphors, especially green phosphors, for such high-current-density tubes, e.g. $Zn_2SiO_4$:Mn and $Gd_2O_2S$:Tb, have been developed in place of the ZnS type phosphors, and $Y_2O_2S$:Tb has recently also been developed. It has been shown that the current density-dependencies of the brightness of these phosphors are certainly better than in the ZnS type and that they have less saturation in the region of high current density. However, when displaying a picture in cathode-ray tube coated with these phosphors, the problem arises of the temperature of a phosphor screen rising up to about 100°C at high current density. Also, the phosphors undergo degradation in characteristics (decreases in brightness and shifts in colour tone) at such high temperatures).

The object of this invention is to provide phosphors of good luminescent brightness and in particular to avoid or mitigate the problems discussed above.

The invention as claimed is intended to provide a solution.

In a phosphor of this invention the alkaline-earth metal sulfide may be for example CaS, SrS, MgS, BaS, CaSrS or CaMgS. The halogen element may be Cl, Br, I or F. By doping the phosphor with P together with the halogen element, the energy efficiency can be enhanced approximately 10 % or more as compared with a phosphor doped with only the halogen element.

The lanthanides are the elements with atomic no. 57 to 71.

An instance of doping with both P and Cl in CaS has been reported in "Journal of Luminescence 5/87, 1972" by W. Lehmann. In this case, however, Eu or Ce or the like is not present, and the luminescence excited by an electron beam is probably caused by $P^{3+}$ . $Cl^-$ pairs. The main emission peak lies at 582 nm which is not the case in phosphors of this invention, and the luminescence is yellow. This therefore differs from the invention where both P and Cl remarkably enhance for example the red luminescence of $Eu^{2+}$ and the green luminescence of $Ce^{3+}$.

An alkaline-earth metal sulfide phosphor which contains a small quantity of Ba has an increased luminescence compared with one with does not contain Ba. Such a phosphor has the general formula $M_{1-x}Ba_xS$:Ln. M is at least one of Ca, Sr, Mg with a combination of Sr and Mg excepted. Ln is at least one of the elements of the lanthanide series, Mn, Cu, Ag, Pb and Au. $0.00005 \leq x \leq 0.01$. This phosphor is of high brightness even when neither halogen nor phosphorus is contained, but if doped with 100—10,000 p.p.m. of elemental phosphorus in the presence of a halogen element its brightness is yet higher. If $x$ is outside the range specified above an increase in the luminescence intensity is scarcely noted.

A phosphor of the general formula $M'_{1-x}(Ba \cdot Mg)_x S:Ln$ (where $M'$ is at least one of Ca and Sr, and Ln and $x$ are as above) and also this phosphor doped with 100—10,000 p.p.m. of elemental phosphorus in the presence of a halogen element, exhibit increased luminescence intensities as compared with a phosphor which contains neither Ba nor Mg.

The element or elements denoted in the above formulae by Ln should preferably be $Eu^{2+}$ and/or $Ce^{3+}$ their amount being preferably $10^{-5}$—$10^{-2}$ gram atom per mol of the alkaline-earth metal sulfide. If present in less than this amount their action as an activator is slight, and if they are present in more this specified amount, the luminescent brightness decreases.

The preferred content of the halogen element is $10^{-5}$—$10^{-1}$ gram atom per mol of the alkaline earth metal sulfide, while the elemental P content is 100—10,000 p.p.m. Both these content ranges are specified because, if they are not reached or are exceeded, an increase of the luminescence intensity is not noted.

Phosphors of this invention can be produced by heating, in an atmosphere containing $H_2S$ and/or H2:

(1)  an alkaline earth metal sulfide, or
(1')  an alkaline-earth metal compound capable of turning into a sulfide when heated together with sulfur or a sulfur compound, together with sulfur or the appropriate sulfur compound, and
(2)  a compound of a lanthanide (such as Eu and Ce), Mn, Cu, Ag, Pb and/or Au, and if necessary,
(3)  elemental phosphorus or a phosphorus compound yielding elemental phosphorus, and
(4)  a halogen element or a halogen compound.

$PCl_3$, $PF_5$ or $PF_3$ may be employed as compound (3) and compound (4) simultaneously. Ammonium halide is favoured as the halogen compound because part of the ammonium halide tends to act as a flux while part provides the halogen element for the phosphor.

The temperature of heating is preferably in the range 1,000—1,400°C. For BaS, however, approximately 700°C is preferred.

Phosphors have an excellent luminescent colour especially when used in a colour picture tube. For example, the alkaline-earth metal sulfide activated with Ce is a green emitting phosphor, the alkaline-earth metal sulfide activated with Eu or activated with both Eu and Ce is a red-emitting phosphor, and the alkaline-earth metal sulfide activated with Mn, Cu, Pb, Ag, Au or both Au and X (where X is halogen) is a blue-emitting phosphor. All the phosphors doped with phosphorus and a halogen element exhibit substantially the same emission peaks as phosphors which are not doped with phosphorus.

The red-emitting phosphor has the red colour in itself, so that even when the phosphor is not coated with any pigment in application to a colour picture tube, a high contrast as in other phosphors of the pigmented type can be attained. Accordingly, the cost of coating the phosphor with a pigment can be avoided, and the reduction of brightness ascribable to the coating can be prevented.

When these phosphors are applied to the faceplate of the cathode ray tube, it is preferable to use aromatic diazo compounds adapted to become adhesive upon exposure to light, not, as is conventional slurries consisting of the phosphors and photosensitive composites. The reason for this is that the alkaline earth metal sulfide phosphors are, in general, less resistant to water and are liable to have their brightness reduced by the slurry method because they are kept in contact with water in the slurries for a long time.

Preferably the phosphors when substantially dry are brought into contact with parts which have become adhesive upon exposure, so that the phosphors are not held in contact with moisture for long. However, phosphors doped with F and P exhibit better water-resistant properties than those which do not contain F. They can accordingly form bright cathode-ray tubes even with a wet process.

A cathode ray tube having at least one of the abovementioned phosphors or, if containing only Au as an activator, a phosphor activated with Au and the halogen element and not containing P, applied on the inner surface of its faceplate has excellent characteristics as a high current density-tube. Even when the cathode-ray tube has the current density raised by two or more orders of magnitude with respect to the usualy value, it hardly undergoes saturation in brightness. It can be used as a high current density-tube of normal excitation current density of 50 mA/cm² or higher at the maximum.

This invention will now be illustrated by examples, with reference to the accompanying drawings in which:—

Figures 1 to 9 are graphs each showing the emission spectrum of a phosphor embodying this invention;

Figures 10 to 13 are graphs showing variations in relative intensity to explain the properties of phosphors according to this invention; and

Figure 14 is a diagram to explain the shifts in chromaticity coordinates of cathodo-luminescence from phosphors according to this invention ascribable to a rise in temperature.

Examples 1—5:

CaS, 0.1 mol-% (percentage calculated with respect to CaS, as in the case below) of EuS, and 0.005 mol-% of Ce$_2$S$_3$ were mixed well. The mixture was divided into five parts, which were placed in respective quartz boats. Each sample was baked at 1,200°C for 1 hour in an atmosphere consisting of Ar at 0.5 atm. and H$_2$S at 0.5 atm. and containing PCl$_3$. The temperature of a container holding PCl$_3$ was varied to alter the PCl$_3$ concentration in the Ar. Thus, phosphors CaS:Eu, Ce, P, Cl and coloured red were obtained. The contents of P and Cl are listed in Table 1. Relative energy efficiencies when these phosphors were irradiated with an electron beam of 10 kV and 1×10$^{-6}$ A under a pressure of 2×10$^{-6}$ Torr (3×10$^{-4}$ Pa) are also listed.

For comparison, a phosphor which did not contain P (i.e. CaS:Eu, Ce, Cl) was obtained by mixing CaS, 0.1 mol-% of EuS, 0.005 mol-% of Ce$_2$S$_3$ and 10 mol% of NH$_4$Cl well, placing the mixture in a quartz boat, and baking the mixture at 1,200°C for 1 hour in an atmosphere of Ar at 0.5 atm. and H$_2$S at 0.5 atm. The Cl content of this phosphor was about 5 mol-%. By varying the amount of NH$_4$Cl, three phosphors having unequal Cl contents were obtained. The results with these samples are also listed in Table 1, as Comparative Example 1. Energy efficiencies were derived as above.

TABLE 1

| No. | Cl Concentration | P Concentration | Relative Energy Efficiency |
|---|---|---|---|
| Comparative Ex. 1 | 5 % | 0 | 100 % |
| Comparative Ex. 2 | 2.5 % | 0 | 98.4 % |
| Comparative Ex. 3 | 1 % | 0 | 101 % |
| Example 1 | 600 ppm | 150 ppm | 112 % |
| Example 2 | 2700 ppm | 450 ppm | 123 % |
| Example 3 | 4500 ppm | 900 ppm | 130 % |
| Example 4 | 7200 ppm | 1800 ppm | 124 % |
| Example 5 | 11500 ppm | 2300 ppm | 121 % |

As is apparent from Table 1, the Eu$^{2+}$ and Ce$^{3+}$ activated CaS phosphors doped with P at above 100 p.p.m. and with Cl exhibited energy efficiency enhancement of more than 10% in comparison with phosphors doped with only Cl.

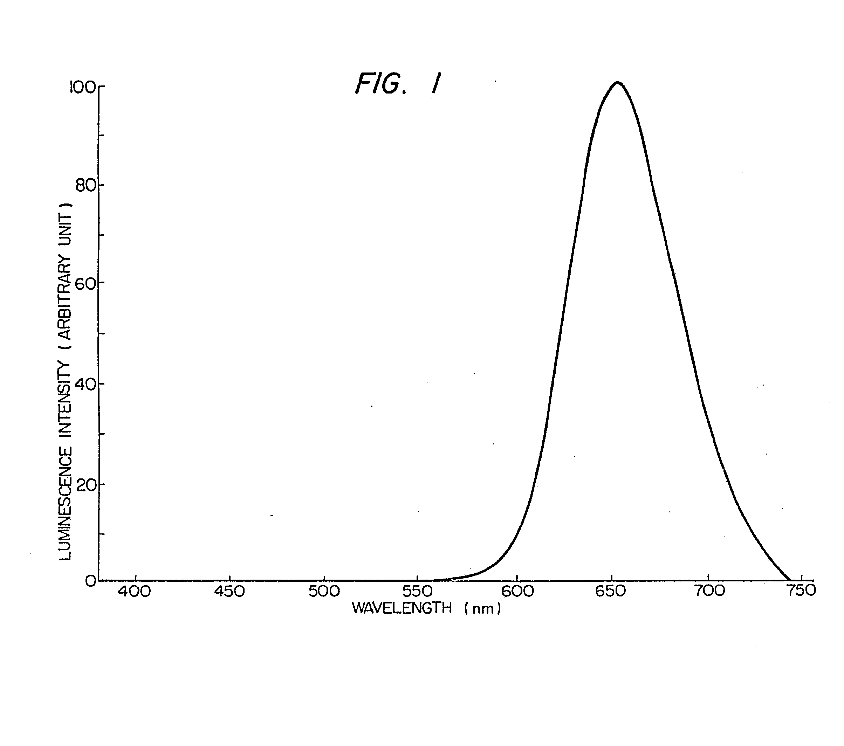

The emission spectrum of the phosphors of Example 1 is shown in Figure 1. The main emission peak is at 652 nm and was the same for the phosphors of comparative Example 1.

Similar results were achieved when Cl was substituted by Br or I.

Example 6:

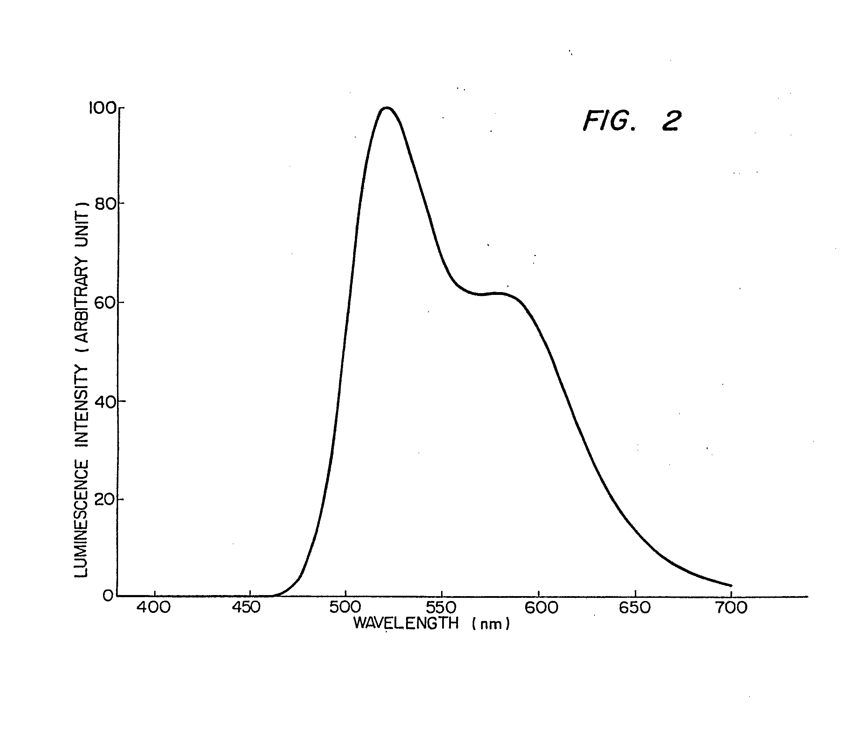

CaCO$_3$ containing 0.1 mol-% of CeO$_2$ was stirred well, and was held at 1,300°C in air for 6 hours. The resultant oxide was pulverised and the powder was sulfurized by keeping it at 1,200°C in an H$_2$S atmosphere for 2 hours. Then, while a mixed gas consisting of Ar at 0.5 atm. and H$_2$S at 0.5 atm. and containing PCl$_3$ was kept flowing as in Example 1, the resultant powder was baked at 1,200°C for 30 minutes. The phosphor CaS:Ce, P, Cl was obtained, with a P concentration of 600 p.p.m. and a Cl concentration of 2,800 p.p.m. Under excitation of 10 kV and 1×10$^{-6}$A, it exhibited a main emission peak at 521 nm with an energy efficiency of 22 %. The emission spectrum of this phosphor is shown in Figure 2.

Comparative Example 4:

CaCO$_3$ containing 0.1 mop-% of CeO$_2$ was stirred well, and was held in air at 1,300°C for 4 hours. The resultant oxide was pulverised, NH$_4$Cl at 10 mol-% with respect to CaCO$_3$ was added to the powder, and the powder was sulfurized at 1,200°C in an H$_2$S atmosphere for 2 hours. A phosphor expressed as CaS:Ce, Cl was obtained. Under the same excitation conditions as in Example 6, the main emission peak lay at 521 nm, as in Example 6, but the energy efficiency was 20%. Energy efficiency is raised approximately 10% by doping with P and Cl in the phosphor of Example 6.

Example 7:

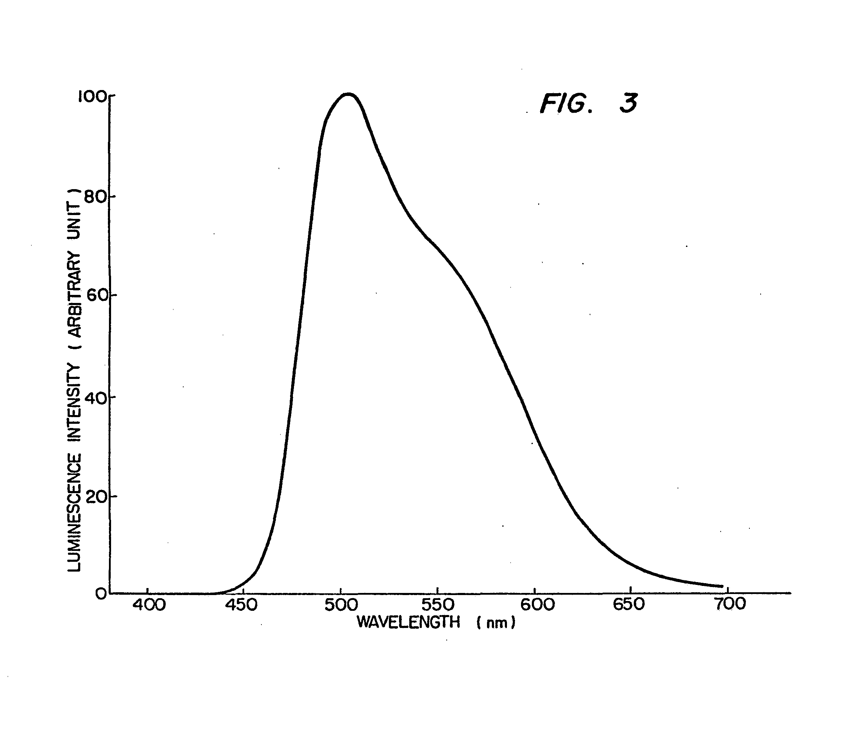

SrSO$_4$ and 0.1 mol-% (with respect to SrSO$_4$) of CeO$_2$ were mixed well, and the mixture was baked at 1,200°C in air for 5 hours. The baked material was pulverized, and the powder was sulfurized by holding it at 1,100°C in an $H_2S$ atmosphere for 2 hours. Subsequently, the sulfurized powder was baked for 30 minutes in a mixed gas consisting of Ar at 0.5 atm. and $H_2S$ at 0.5 atm. and containing $PCl_3$. A phosphor expressed as SrS:Ce, P, Cl was obtained, with a P concentration of 300 p.p.m. and a Cl concentration of 1,200 p.p.m. The emission spectrum on excitation with an electron beam of 10 kV and $10^{-6}$ A is shown in Figure 3, and the main emission peak was at 506 nm.

For comparison, the baked material of this example mixed with 10 mol-% (with respect to $SrSO_4$) of $NH_4Cl$ was sulfurized by holding it at 1,100°C in an $H_2S$ atmosphere for 2 hours. The main emission peak of this phosphor containing no P was at 506 nm as above, but the energy efficiency was approximately 15 % higher in the phosphor containing P.

Example 8:

Example 7 was repeated with $SrSO_4$ replaced by $BaCO_3$ and the sulfurizing temperature at 800°C. Both the phosphor containing P and the phosphor not containing P had main emission peaks at 490 nm but the energy efficiency of the phosphor containing P was approximately 10% higher.

Example 9:

Example 7 was repeated with $SrSO_4$ replaced by $MgCO_3$ and the sulfurizing temperature at 1,200°C. Although the main emission peaks lay at 520 nm in both the phosphor containing P and the phosphor not containing P, energy efficiency was approximately 12% higher in the phosphor containing P

Example 10:

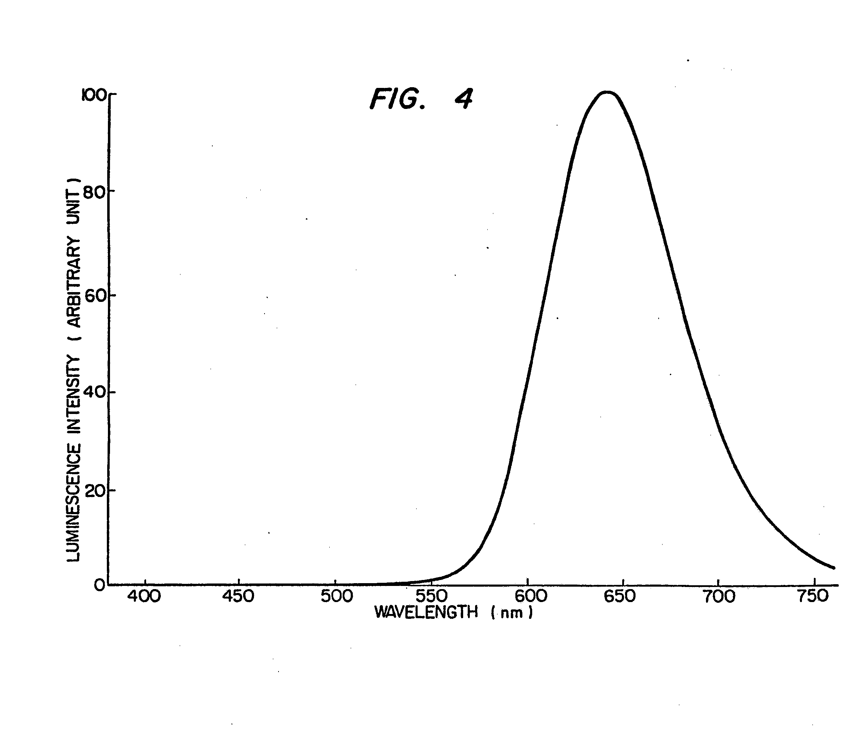

50 mol-% of CaS, 50 mol-% of SrS, 0.2 mol-% of Eus, 0.01 mol-% of $Ce_2S_3$, 5 mol-% of $NH_4Cl$ and 0.5 mol-% of P were mixed well, and the mixture was held at 1,100°C for 2 hours in an atmosphere consisting of Ar at 0.3 atm. and $H_2S$ at 0.7 atm., to synthesize a phosphor expressed as $Ca_{0.5}Sr_{0.5}S$:Eu, Ce, P, Cl. The P concentration of this phosphor was about 2,000 p.p.m. and the Cl concentration was about 18,000 p.p.m. The emission spectrum on excitation with an electron beam of 10 kV and $10^{-6}$ A is shown in Figure 4, the main emission peak lay at 642 nm, and the relative luminescence intensity was 138% with reference to Comparative Example 1

For comparison, a phosphor not containing P was obtained by omitting P from the above starting materials and performing the same process. The main peak of the emission spectrum of this phosphor lay at 642 nm as above, but the relative luminescence intensity was 117 %. Thus the brightness of the phosphor containing P was 18 % higher than that of the phosphor not containing P.

Examples 11—15:

$CaCO_3$ and $SrCO_3$ were weighed in equal mol amounts 0.15 mol-% of Eu and 0.015 mol-% of Ce were added to 1 mol of the mixture in the form of oxides, and $BaCO_3$ in the quantities indicated in column 2 of Table 2 were mixed in. Samples thus prepared were held at 1,300°C for 10 hours. The resultant oxides were held at 1,200°C in an $H_2S$ atmosphere for 3 hours, to obtain phosphors coloured reddish orange and expressed as $Ca_{0.5-x/2}Sr_{0.5-x/2}Ba_xS$:Eu, Ce.

For comparison, a phosphor was similarly produced without adding any Ba (Comparative Example 5)

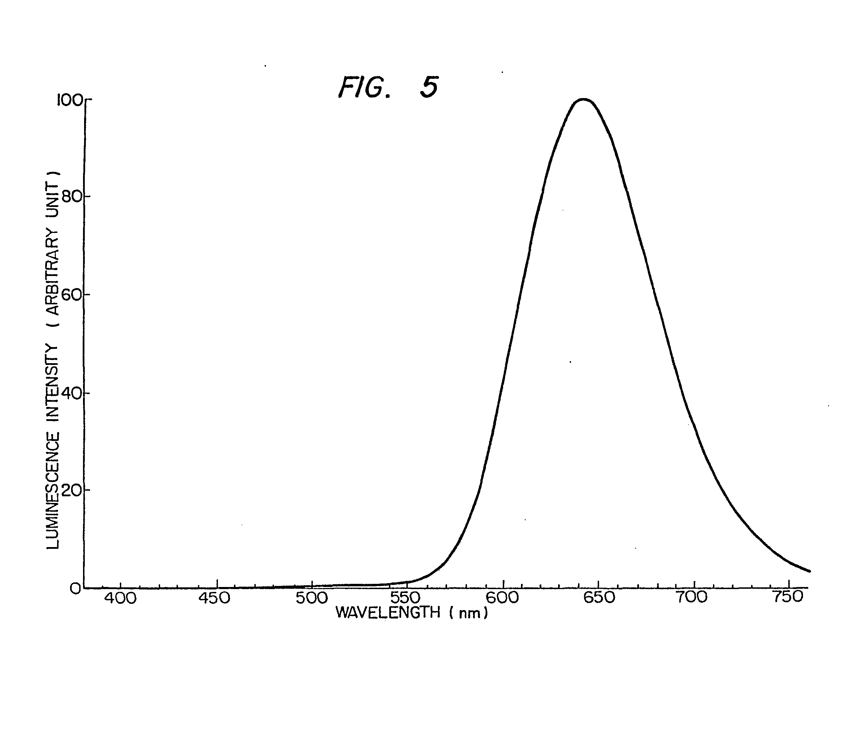

Table 2 also lists (a) the results of measurements at room temperature on the relative energy efficiencies (with reference to the phosphor containing no Ba) of luminescences observed when the phosphors were excited by an electron beam of 10 kV (at a current of $1 \times 10^{-6}$ A), and (b) the concentrations of Ba actually contained in the respective phosphors. A remarkable sensitization by Ba is seen from the table. The emission spectra of the phosphors were identical, and exhibited a single peak at 643 nm as shown in Figure 5.

TABLE 2

| No. | Quantity of Doping (mol-%) | Ba Concan- tration (ppm) | Relative Energy Efficiency |
|---|---|---|---|
| Comparative Ex. 5 | 0 | 0 | 1 |
| Example 11 | 0.05 | 100 | 1.28 |
| Example 12 | 0.1 | 250 | 1.35 |
| Example 13 | 0.5 | 1000 | 1.28 |
| Example 14 | 1.0 | 2300 | 1.22 |
| Example 15 | 2.0 | 4800 | 1.05 |

Examples 16—20:

0.08 mol-% of $Eu_2O_3$, 0.01 mol-% of $CeO_2$ and $BaCO_3$ in the quantities listed in column 2 of Table 3 were mixed with 1 mol of $CaCO_3$. The mixtures were held at 1,300°C for 10 hours, and the resultant oxide samples were held at 1,200°C for 4 hours in a mixed atmosphere of $H_2S$ and $H_2$. Phosphorus coloured pinkish red and expressed as $Ca_{1-x}Ba_xS:Eu, Ce$ were obtained. The structure was confirmed by the X-ray diffraction. For comparison, a phosphor was similarly synthesized without Ba.

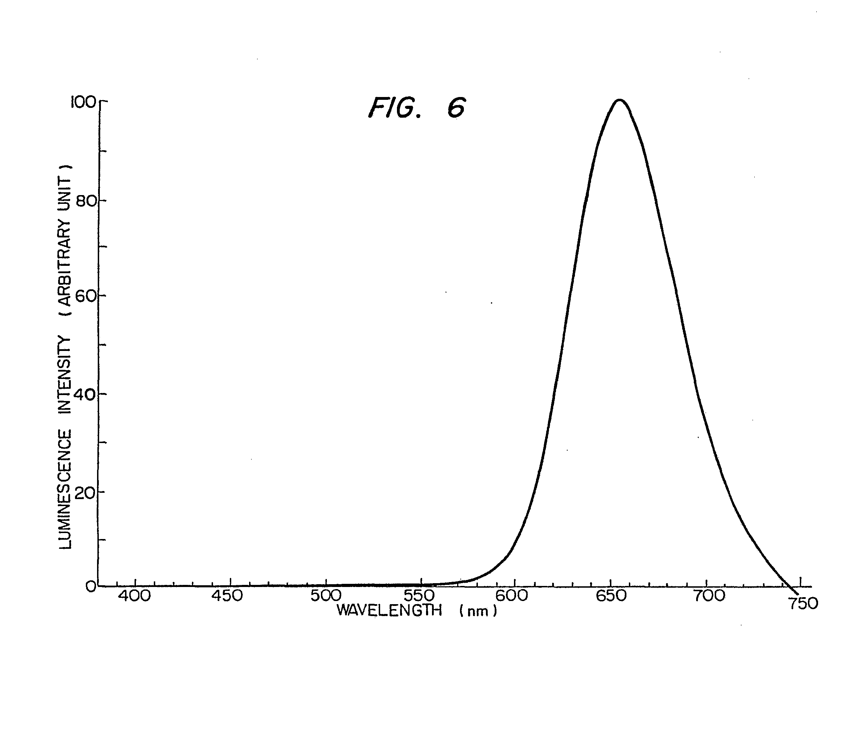

The phosphors were excited with an electron beam of 10 kV (at a current of $1 \times 10^{-6}$ A) at room temperature, and their emission spectra and luminescence intensities were measured. All the phosphors had the same emission spectra, and exhibited red luminescence with a single peak at 652 nm as shown in Figure 6. The actual Ba concentrations and the relative energy efficiencies (with reference to the phosphor not containing Ba) are listed in Table 3.

TABLE 3

| No. | Quantity of Doping (mol-%) | Ba Concentration (ppm) | Relative Energy Efficiency |
|---|---|---|---|
| Comparative Ex. 6 | 0 | 0 | 1 |
| Example 16 | 0.01 | 50 | 1.21 |
| Example 17 | 0.05 | 100 | 1.30 |
| Example 18 | 0.1 | 200 | 1.33 |
| Example 19 | 0.5 | 800 | 1.25 |
| Example 20 | 1.0 | 2000 | 1.10 |

Examples 21—25:

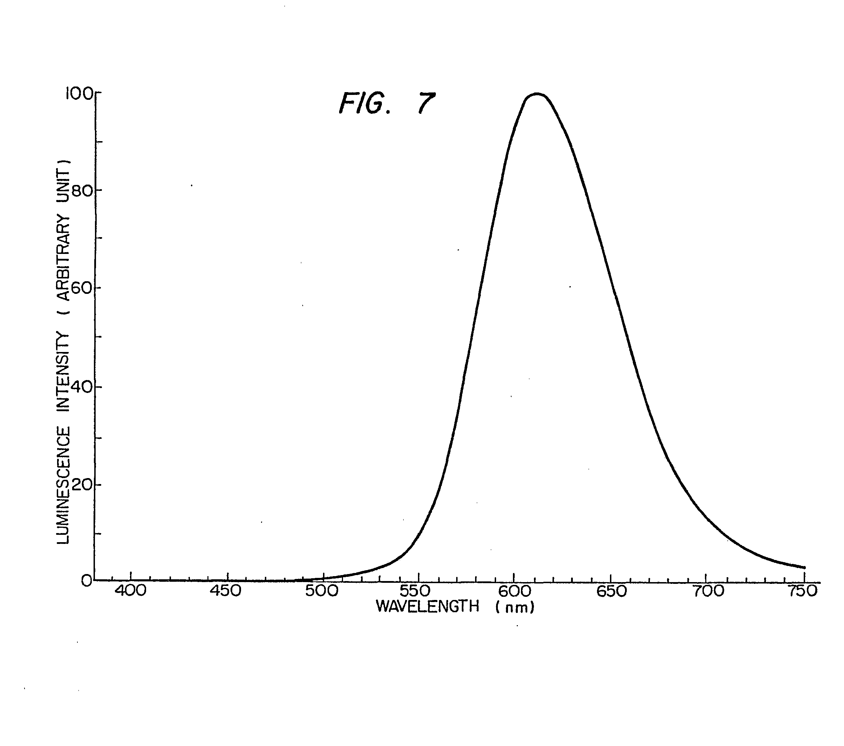

$CaCO_3$ in Examples 16—20 was replaced with $SrCO_3$, and similar processes were performed, to obtain phosphors coloured orange and expressed as $Sr_{1-x}Ba_xS:Eu, Ce$. The results are listed in Table 4. The catholuminescence of the phosphors was orange with a single peak at 613 nm as shown in Figure 7.

TABLE 4

| No. | Quantity of Doping (mol-%) | Ba Concentration (ppm) | Relative Energy Efficiency |
|---|---|---|---|
| Comparative Ex. 7 | 0 | 0 | 1 |
| Example 21 | 0.01 | 10 | 1.1 |
| Example 22 | 0.05 | 50 | 1.18 |
| Example 23 | 0.1 | 100 | 1.25 |
| Example 24 | 0.5 | 500 | 1.23 |
| Example 25 | 1.0 | 1200 | 1.12 |

Example 26—32:

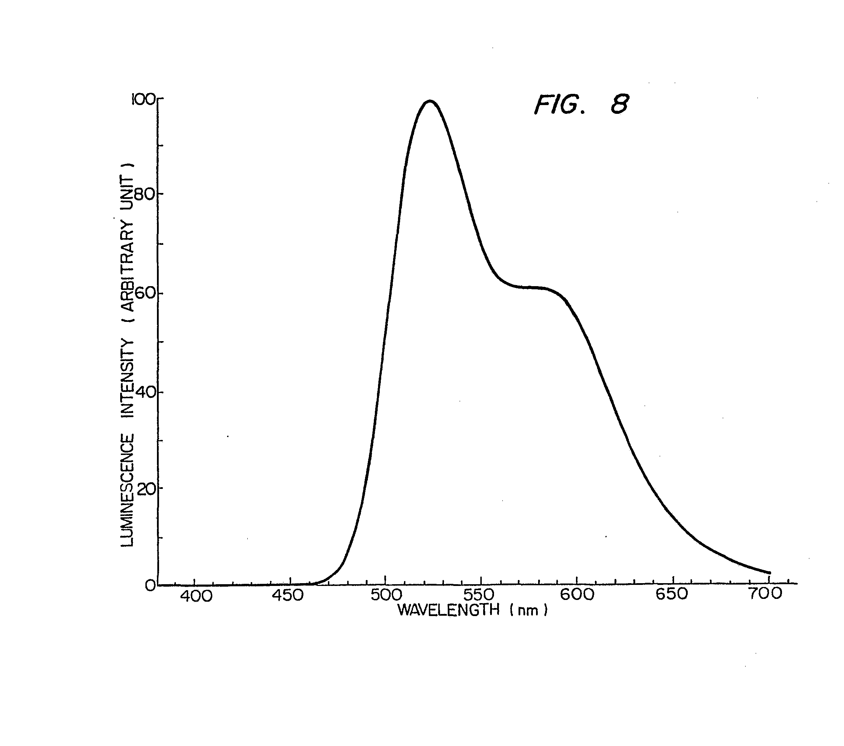

0.15 mole-% of $CeO_2$ and $BaCO_3$ in the quantities listed in Column 2 of Table 5 were mixed with 1 mol of $CaCO_3$. The mixtures were held at 1,400°C for 5 hours, and the resultant oxide samples were held at 1,200°C in an $H_2S$ atmosphere for 3 hours. Phosphors expressed as $Ca_{1-x}Ba_xS:Ce$ were obtained. This structure was confirmed by the X-ray diffraction. For comparison a phosphor was made by a similar process from a starting mixture omitting $BaCO_3$. The emission spectra of these phosphors are shown in Figure 8. They exhibited green luminescence with a main emission peak at 520 nm and a shoulder at 580 nm.

6

# 0 030 853

TABLE 5

| No. | Quantity of Doping (mol-%) | Ba Concentration (ppm) | Relative Energy Efficiency |
|---|---|---|---|
| Comparative Ex. 8 | 0 | 0 | 1 |
| Example 26 | 0.01 | 50 | 1.15 |
| Example 27 | 0.05 | 100 | 1.28 |
| Example 28 | 0.1 | 200 | 1.31 |
| Example 29 | 0.3 | 500 | 1.28 |
| Example 30 | 0.5 | 800 | 1.20 |
| Example 31 | 1.0 | 1700 | 1.13 |
| Example 32 | 1.5 | 2400 | 1.05 |

Examples 33—40:

0.1 mol-% of $Eu_2O_3$, 0.01 mol-% of $CeO_2$ and $BaCO_3$ in the quantities listed in Table 6 were mixed with $CaCO_3$. The mixtures were baked in air at 1,300°C for 4 hours, and the resultant oxide samples were sulfurized at 1,200°C in an $H_2S$ atmosphere for 2 hours. The sulfurized samples were then heated at 1,200°C for 30 minutes in a mixed gas consisting of Ar at 0.5 atm. and $H_2S$ at 0.5 atm. and containing 5 mol-% of $PCl_3$. Phosphors coloured pink and expressed as $Ca_{1-x}Ba_xS$:Eu, Ce, P, Cl were obtained. For comparison a similar phosphor containing no Ba was produced (no $BaCO_3$ was added and the baking time in air was 5 hours). These phosphors were irradiated by an electron beam of 10 kV and $1 \times 10^{-6}$ A in a vacuum of $2 \times 10^{-6}$ Torr ($3 \times 10^{-4}$ Pa), and their relative energy efficiencies (with reference to the phosphor not containing Ba) were measured. The results are in Table 6. The emission spectra of the samples were almost the same as those of phosphors containing neither P nor Cl.

TABLE 6

| No. | Quantity of Doping with Ba (mol-%) | Relative Energy Efficiency |
|---|---|---|
| Comparative Ex. 9 | 0 | 1 |
| Example 33 | 0.005 | 1.04 |
| Example 34 | 0.01 | 1.11 |
| Example 35 | 0.02 | 1.16 |
| Example 36 | 0.05 | 1.16 |
| Example 37 | 0.1 | 1.12 |
| Example 38 | 0.5 | 1.10 |
| Example 39 | 0.75 | 1.08 |
| Example 40 | 1.0 | 1.06 |

Examples 41—43:

To three samples of the starting materials of Example 37 were added, respectively 0.066 mol-% 0.132 mol-% and 0.264 mol-% of $MgCO_3$. Similar processes were conducted to synthesize the phosphors $Ca_{1-x-y}Ba_xMg_yS$:Eu, Ce, P, Cl. The relative energy efficiencies of these are in Table 7. When Ca sites are substituted by Ba ions as in the phosphors of Example 37 etc., a lattice distortion is caused because the ionic radius (0.143 nm) of the Ba ions is greater than that (0.106 nm) of the Ca ions. It is

7

intended to compensate for the lattice distortion by using Mg ions having an ionic radius (0.078 nm) smaller than that of Ca. Example 42 had Mg ions mixed therein in a proportion calculated to cancel the lattice distortion due to the Ba ions, this phosphor had a higher energy efficiency compared with those containing more or less Mg ions. The phosphor with too much Mg has a lower energy efficiency than the phosphor doped with only Ba. The emission spectrum exhibited a single peak at 653 nm, and was almost the same as that of a phosphor containing none of Mg, P and Cl.

TABLE 7

| No. | Quantity of Doping with Ba (mol-%) | Quantity of Doping with Mg (mol-%) | Relative Energy Efficiency |
|---|---|---|---|
| Example 37 | 0.1 | 0 | 1 |
| Example 41 | 0.1 | 0.066 | 1.03 |
| Example 42 | 0.1 | 0.132 | 1.07 |
| Example 43 | 0.1 | 0.264 | 0.98 |

Example 44:

Processes were carried out similarly as in Examples 33—40 except that (i) 0.1 mol-% of $Eu_2O_3$, 0.01 mol-% of $CeO_2$ and 0.1 mol-% of $BaCO_3$ were mixed with $SrCO_3$, (ii) the sulfurization temperature was 1,000°C and (iii) the concentration of $PCl_3$ was made 3 mol-%. The phosphor obtained was pulverized, and the powder was held at 1,050°C for 2 hours in a mixed gas consisting of Ar under 0.5 atm. and $H_2S$ under 0.5 atm. This phosphor is $Sr_{1-x}Ba_xS:Eu$, Ce, P, Cl, and its relative energy efficiency was enhanced 12.5% over that of a phosphor which was similarly produced but without $BaCO_3$, for comparison. The emission spectrum exhibited a single peak at 612 nm, and was substantially the same as that of a phosphor containing neither P nor Cl.

Example 45:

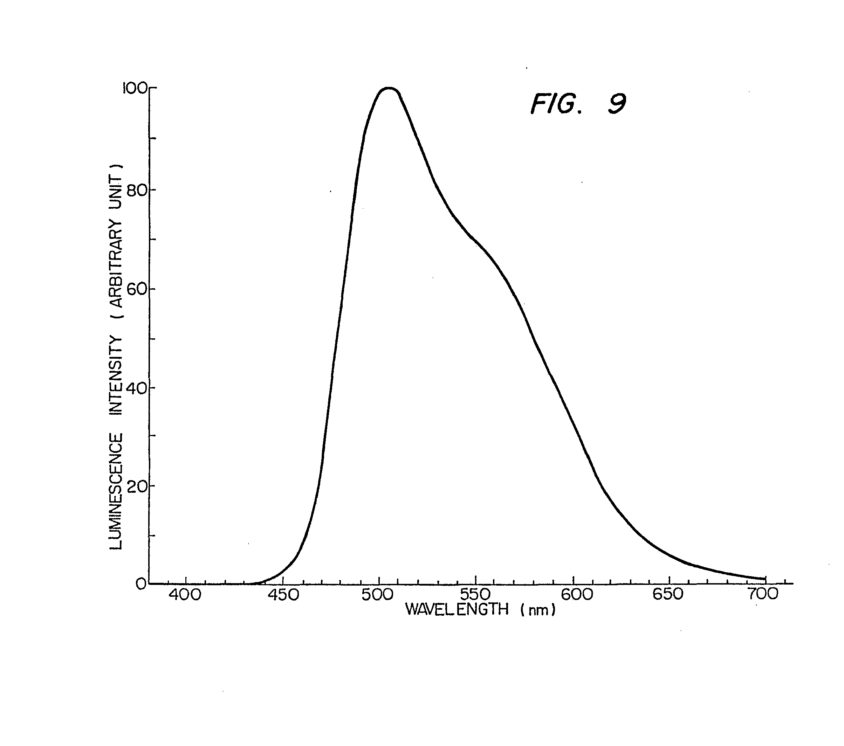

The $Eu_2O_3$ used in Example 44 was omitted but 0.15 mol-% of $CeO_2$ was added, and a similar process performed. The phosphor $Sr_{1-x}Ba_xS:Ce$, P, Cl was obtained. The relative energy efficiency of this was 22% better than that of a phosphor produced by the same process without $BaCO_3$. The emission spectrum had dual peaks at 506 nm and 560 nm as shown in Figure 9, and was the same as that of the phosphor without Ba.

Example 46:

0.15 mol-% of $CeO_2$ and 0.1 mol-% of $BaCO_3$ were mixed with a mixture of 50 mol-% of $CaCO_3$ and 50 mol-% of $SrCO_3$. The resultant mixture was held at 1,300°C for 4 hours in air, and the oxide obtained was sulfurized at 1,150°C for 2 hours in an $H_2S$ atmosphere. The phosphor $Ca_{0.5-x/2}Sr_{0.5-x/2}Ba_xS:Ce$ was obtained. When this was irradiated by an electron beam of 10kV and $1 \times 10^{-6}$ A in vacuum, an emission spectrum with a main peak at 514 nm and a secondary peak at 578 nm was obtained. The relative energy efficiency of the phosphor was 14% higher than the same phosphor produced without Ba.

Example 47:

An aqueous solution containing 0.01 % of $Eu^{2+}$ was mixed with 6 gr. of $CaCO_3$ so that the concentration of $Eu^{2+}$ in the mixture would become 0.1 mol-% with respect to $CaCO_3$. The mixture was held at 1,400°C for 4 hours in the air, to obtain 3.4 gr. of Eu-doped CaO baked product. After being pulverized, it was divided into two equal parts. One part was packed in a quartz boat, put in a quartz reaction tube and sulfurized at 1,150°C for 3 hours by passing $H_2S$ gas at a rate of 100 cc per minute. This sample was denoted by A. The remaining baked product (1.7 g) was similarly sulfurized, except that $H_2S$ was passed only during the first 2 hours, Ar containing $10^{-3}$ mol-% of $PCl_3$ was passed during the next 30 minutes and $H_2S$ only was passed again during the last 30 minutes, to obtain a sulfide (B).

Separately from these samples, $CaCO_3$ containing 0.1 mol-% of $BaCO_3$ with Eu mixed in as above, was subjected to the same treatment as sample B to produce the phosphor $Ca_{1-x}Ba_xS:Eu$, P, Cl was obtained (C). The P concentrations of B and C were 200 p.p.m. and the Ba concentration in C was 200 p.p.m. The emission spectra of A, B and C when excited by an electron beam of 10 kV in a vacuum of $5 \times 10^{-6}$ Torr ($7 \times 10^{-4}$ Pa) had a single peak at 652 nm and were quite identical. In contrast, the relative energy efficiencies with that of A set at 1 were 1.18 for B and 1.34 for C.

Examples 48—53:

Mixtures of 2 g of $CaCO_3$ and 2.95 g of $SrCO_3$ containing 0.05 mol-% of $Eu_2O_3$ and 0.01 mol-% of

8

$CeO_2$ (with respect to the carbonates) and also containing $BaCO_3$ in the quantities shown in Table 8 were prepared. For comparison, a mixture omitting $BaCO_3$ was also prepared. These mixtures were baked in air at 1,300°C for 4 hours. The baked products were loaded in quartz boats and were heated to 1,200°C in quartz reaction tubes while $H_2S$ gas was passed. After 1.5 hour, Ar containing 0.001 mol-% of $PCl_3$ was passed at a flow rate equal to that of the $H_2S$ gas for 30 minutes, and thereafter the $H_2S$ gas was passed for 30 minutes. Phosphors expressed as $Ca_{0.5-x/2}Sr_{0.5-x/2}Ba_xS$:Eu, Ce, P, Cl and the comparative phosphors not containing Ba were obtained. The emission spectra of these phosphors on excitation by an electron beam had a single peak at 640 nm and were quite identical. Their luminescence intensities in terms of relative energy efficiencies were as listed in Table 8, from which the remarkable effect of doping with Ba is to be noted.

TABLE 8

| No. | Quantity of Doping with Ba (mol-%) | Relative Energy efficiency |
|---|---|---|
| Comparative Ex. 10 | 0 | 1 |
| Example 48 | 0.1 | 1.03 |
| Example 49 | 0.25 | 1.07 |
| Example 50 | 0.5 | 1.16 |
| Example 51 | 0.75 | 1.22 |
| Example 52 | 1.0 | 1.24 |
| Example 53 | 1.5 | 1.22 |

Example 54:

$CaCO_3$ and $SrCO_3$ in various proportions as starting materials and 0.1 mol-% of $Eu_2O_3$ and 0.01 mol-% of $CeO_2$ added to them were mixed well. By holding the mixture at 1,300°C in air for 4 hours, $Ca_xSr_{1-x}O$ doped with Eu and Ce ($0 \leq X \leq 1$) was produced.

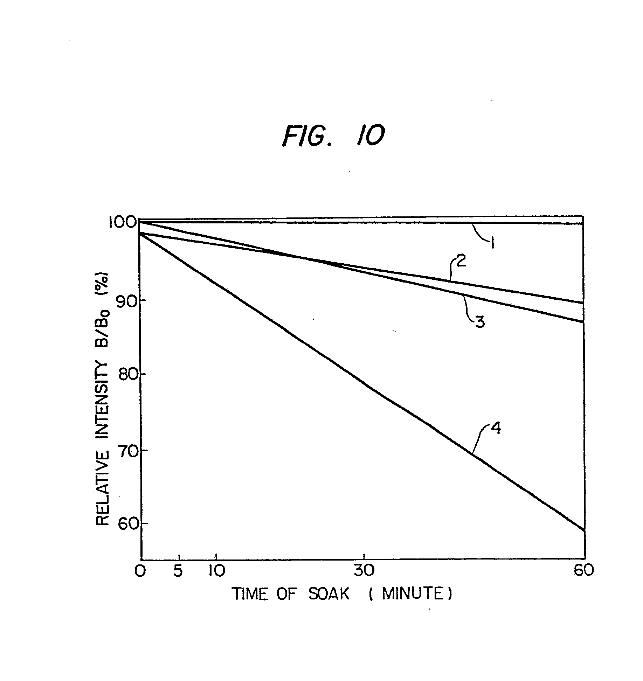

Various samples corresponding to X=1, 0.9, 0.8, 0.75, 0.7, 0.6, 0.5, 0.1 and 0 were held at 1,200°C for 3 hours in an atmosphere of hydrogen sulfide, to obtain Eu, Ce-doped sulfide products. To each sulfide product were added $CaF_2$ in an amount proportional to the mixing ratio X, 3 mol-% of $SrF_2$ and 2 mol-% of $NH_4H_2PO_4$. The mixture was held again at 1,200°C for 3 hours in a hydrogen sulfide atmosphere. F, P-doped alkaline-earth metal sulfide phosphors thus obtained had much better water-resistance than the same kind of matrices not doped with F. More specifically, samples of the phosphors were soaked in water for periods from 5 minutes to 1 hour, after which they were washed with ethyl alcohol and dried with a dryer. For the resultant samples, luminescence characteristics on excitation by an electron beam were measured. The intensity variation characteristics found for samples where X=0.5 and 1 and for similar comparative samples sulfurized for 6 hours without doping with F and P, are shown in Figure 10. The acceleration voltage of the electron beam was 10 kV, and the measurement was at room temperature. Lines 1, 2, 3 and 4 are for cases where X=1 (F, P-doped), X=0.5 (F, P-doped) X=1 (undoped) and X=0.5 (undoped), respectively.

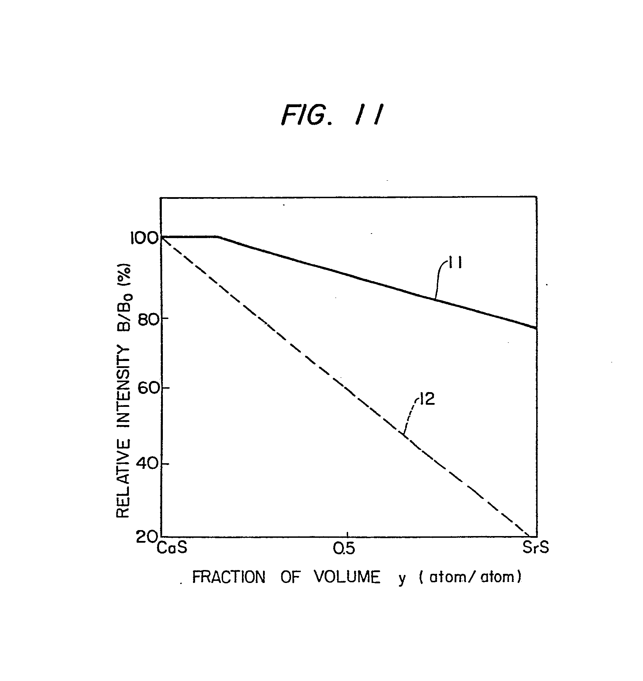

The intensities of the respective samples (F, P-doped) where X=1, 0.9, 0.8, 0.75, 0.7, 0.6, 0.5, 0.1 and 0 which had been soaked in water for 1 hour and dried are shown in Figure 11 relative to the intensities of the samples before soaking. Line 11 corresponds to the F, P-doped samples, and line 12 corresponds to the undoped samples. In both Figures, remarkable enhancement in the water-resistance quality are illustrated for the F, P-doped samples.

It has been found that, even when doping with F, water-resistance deteriorates as the Sr component becomes excessive. While, in the above example, the effects when doping with 6 mol-% of F and 2 mol-% of P with respect to the quantity of the matrix were described, it has been found that water-resistance is improved over the ranges 0.5—10 mol-% of F and 0.05—10 mol-% of P and that it depends principally on the doping concentration of F. While, in the above example, F and P were added as solids, it has been found that a similar waterproofing effect is noted even when $PF_5$ gas is included in hydrogen sulfide during the baking. When doping with F and P, there was noted not only enhancement of water-resistance but also enhancement of luminous efficiency as noted in other examples. Improvement of the water-resistance by doping with F and P was observed, not only in $Ca_xSr_{1-x}S$, but also in other alkaline-earth metal sulfides such as, for example, $Ca_xMg_{1-x}S$ and $Ca_xBa_{1-x}S$.

Examples 55—57:

A red phosphor $Ca_{0.85}Mg_{0.15}S:Eu$ (0.08%), Ce (0.008%), Ba (0.1%), a green phosphor $Ca_{0.5}Mg_{0.5}S:Ce$ (0.1%), Ba (0.1%) and a blue phosphor CaS:Cu (0.1%), Na (0.1%), Ba (0.1%) produced from an alkaline-earth metal sulfate, a rare-earth or metal sulfide, and BaS as starting materials and baking them at 1,150°C in a hydrogen sulfide atmosphere for 8 hours, exhibited high energy efficiencies of 15%, 23% and 18% respectively on excitation with an electron beam of 10 kV. Satisfactorily, these efficiencies did not change at all even when the phosphors were heated up to 200°C nor when the current density of the electron beam was raised to 150 mA/cm². A colour picture tube having a screen coated with these phosphors so as to be separated by the so-called "black stripes" underwent no saturation in brightness even when the current density was made two orders of magnitude or more higher than in ordinary tubes and could provide pictures with brightness higher 100 times or more.

Examples 58—72:

A carbonate or sulfate of Ca, Sr, Ba or Mg and a compound containing an element of an activator (the compound being a sulfide of Cu or Ag, Au-metal powder or an oxide of Mn or Pb) were mixed at predetermined concentrations. The mixture was held in an $H_2S$ atmosphere at a temperature of 1,100°C for Ca or Mg, at a temperature of 1,000°C for Sr, or at a temperature of 700°C for Ba. The resultant powder was stirred and was held again in the $H_2S$ atmosphere for 4 hours at a temperature 100—150°C above than the corresponding temperature indicated above. The cathode luminescence emission peaks of these phosphors were as follows:—

| | | | |
|---|---|---|---|
| CaS: | Cu | 2.55 eV (sub.) | 2.99 eV (main) |
| MgS: | Cu | 2.85 eV (main) | |
| SrS: | Cu | 2.40 eV (sub.) | 2.68 eV (main) |
| Bas: | Cu | 2.13 eV (main) | |
| CaS: | Au | 2.48 eV | |
| CaS: | Au, Cl | 2.58 eV | |
| SrS: | Au | 2.07 eV (sub.) | 2.51 eV (main) |
| BaS: | Au | 1.92 eV | |
| MgS: | Ag (0.05%) | 2.83 eV | |
| CaS: | Ag (0.05%) | 3.20 eV (main) | 2.51 eV (sub.) |
| SrS: | Ag (0.05%) | 2.78 eV | |
| BaS: | Ag (0.1%) | 2.30 eV | |
| CaS: | Mn (0.1%) | 2.12 eV | |
| CaS: | Pb (0.03%) | 3.39 eV | |
| SrS: | Mn (0.04%) | 2.28 eV | |

Results obtained when applying the foregoing phosphors to the inner surfaces of the faceplates of cathode-ray tubes will now be described.

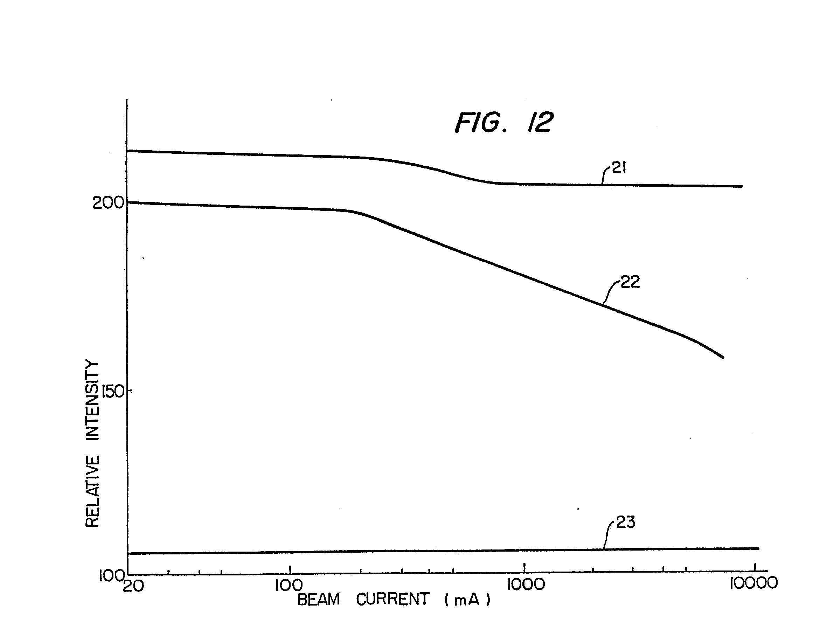

Curve 21 in Figure 12 indicates the relationship between the excitation current and the relative intensity of a cathode-ray tube provided with the phosphor of $Ca_{1-x}Ba_xS:Ce$, P, Cl. Brightness saturation scarcely occurs (at an acceleration voltage of 10 kV and at room temperature; the same conditions apply hereunder with regard to Figure 12). The relative intensity of a cathode-ray tube provided with a prior-art green-emitting phosphor of ZnS:Cu, Al is as shown by curve 22; the brightness reduces as the current increases. The relative intensity of a cathode-ray tube which is at present used in a projection TV set and which is provided with the phosphor $Gd_2O_2S:Tb$ is as shown by curve 23, and is low though saturation is not noted. Moreover, there is a tendency that brightness is reduced with temperature rise.

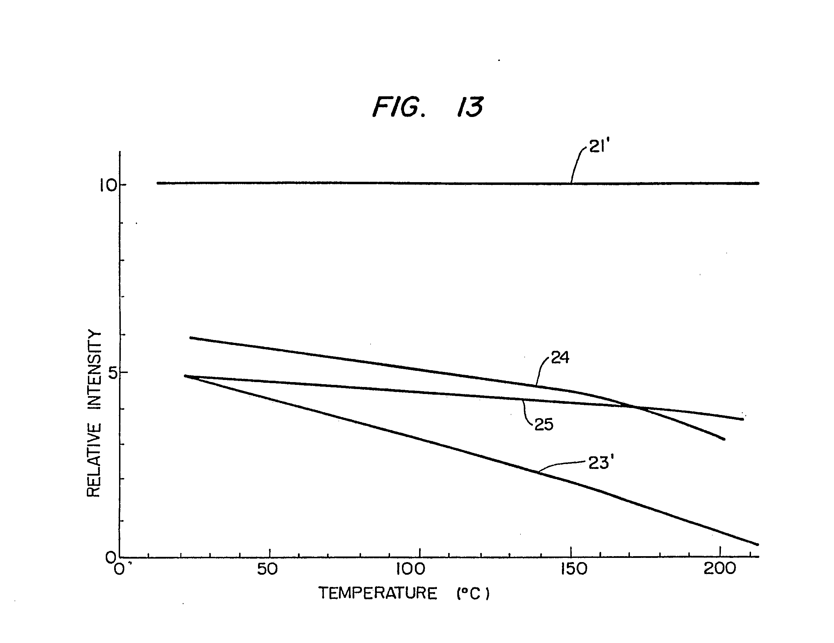

Figure 13 is a graph showing the temperature related intensity characteristics of green phosphors. Curves 21' and 23' are the characteristics of the phosphors which gave the curves 21 and 23 in Figure

10

12, respectively. Curves 24 and 25 are the characteristics of phosphors of $Y_2O_3S$:Tb and $Zn_2SiO_4$:Mn respectively.

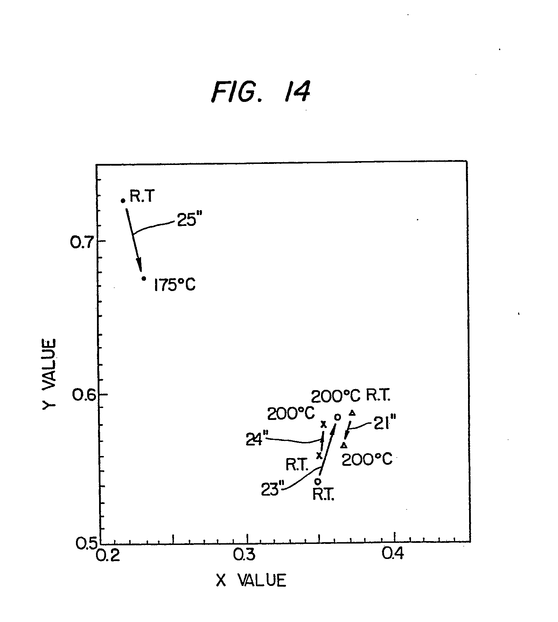

Figure 14 illustrates the shifts of chromaticity coordinates of the green-emitting phosphors ascribable to temperature rises. Curves 21″, 23″, 24″ and 25″ are the characteristics of the phosphors which gave the curves 21, 23, 24 and 25 in Figure 12 and 13, respectively.

**Claims**

1. A phosphor consisting of an alkaline-earth metal sulfide which is activated by at least one element selected from the lanthanides, Mn, Cu, Ag, Pb, and Au and which contains at least one halogen element, characterized in that: the phosphor is doped with elemental phosphorus at a concentration in the range 100 p.p.m. to 10,000 p.p.m.

2. A phosphor according to claim 1 wherein said alkaline-earth metal sulfide is at least one of CaS, SrS, BaS, MgS, (Ca, Sr)S and (Ca, Mg)S.

3. A phosphor according to claim 1 wherein the concentration of the activating element or elements is $10^{-5}$ to $10^{-2}$ gram atom per mol of said alkaline-earth metal sulfide.

4. A phosphor according to any one of claims 1 to 3, wherein the concentration of said halogen element or elements is $10^{-5}$ to $10^{-1}$ gram atom per mol of said alkaline-earth metal sulfide.

5. A phosphor according to any one of claims 1 to 4, wherein said alkaline-earth metal sulfide has the general formula

(A) $M_{1-x}Ba_xS$ (where M is at least one of Ga, Sr and Mg, excluding a combination of Sr and Mg, and $0.00005 \leq x \leq 0.01$), or

(B) $M'_{1-x}A_xS$ (where M' is at least one of Ca and Sr, A is Ba or Ba and Mg together and $0.00005 \leq x \leq 0.01$).

6. A phosphor having the general formula $M_{1-x}Ba_xS$:Ln where M is at least one of Ca, Sr, and Mg, excluding a combination of Sr and Mg, Ln is at least element selected from the lanthanides, Mn, Cu, Ag, Pb and Au, and $0.00005 \leq x \leq 0.01$.

7. A phosphor having the general formula $M'_{1-x}A_xS$:Ln, where M' is at least one of Ca and Sr, A is Ba or a combination of Ba and Mg, Ln is at least one element selected from the lanthanides, Mn, Cu, Ag, Pb and Au, and $0.00005 \leq x \leq 0.01$.

8. A phosphor according to claim 6 or claim 7 wherein Ln is at least one of Ce and Eu.

9. A phosphor according to any one of claims 6 to 8 wherein the concentration of Ln is $10^{-5}$ to $10^{-2}$ gram atom per mol of the alkaline-earth metal sulfide.

10. A method of making an alkaline-earth metal sulfide phosphor which is activated with at least one element selected from the lanthanides, Mn, Cu, Ag, Pb and Au characterized by heating in an atmosphere containing $H_2S$ and/or $H_2$;

(a)(i)  an alkaline earth metal sulfide or
   (ii)  an alkaline earth metal compound capable of turning into a sulfide when heated together with sulfur or a sulfur compound, and sulfur or the sulfur compound as appropriate,
(b)  at least one compound of said activating element or elements,
(c)  elemental phosphorus or a phosphorus compound yielding elemental phosphorus, and
(d)  a halogen compound.

11. A method according to claim 10, wherein said alkaline-earth metal sulfide is at least one of CaS, SrS, BaS, MgS, (Ca, Sr)S and (Ca, Mg)S.

12. A method according to claim 10 or claim 11 wherein the heating is carried out in the temperature range 1,000°C to 1,400°C.

13. A method according to any one of claims 10 to 12, wherein the phosphorus compound and the halogen compound are represented by $PCl_3$, $PF_5$ or $PF_3$.

14. A method according to any one of claims 10 to 13 wherein said alkaline earth metal sulfide has the general formula

(A) $M_{1-x}Ba_xS$ (where M is at least one of Ca, Sr, and Mg, excluding a combination of Sr and Mg and $0.00005 \leq x \leq 0.01$) or

(B) $M'_{1-x}A_xS$ (where M' is at least one of Ca and Sr, A is Ba or Ba combined with Mg and $0.00005 \leq x \leq 0.01$).

15. A method of manufacturing a phosphor according to any one of claims 6 to 9 characterized by heating:

(a)(i)  an alkaline-earth metal sulfide, or
   (ii)  an alkaline-earth metal compound capable of turning into a sulfide when heated together with

# O 030 853

sulfur or a sulfur compound, and sulfur or the sulfur compound as appropriate, and

(b)   at least one compound selected from cpounds of the lanthanides elements, Mn, Cu, Ag, Pb and Au.

16. A method according to claim 15 wherein the heating is carried out in the temperature range 1,000°C to 1,400°C.

17. A cathode-ray tube characterized by at least one alkaline-earth metal sulfide phosphor which is activated with at least one element selected from the lanthanides, Mn, Cu, Pb, Ag and Au, applied on the inner surface of its faceplate, wherein said alkaline earth metal sulfide has the general formula

(A)   $M_{1-x}Ba_xS$ (where M is at least one of Ca Sr and Mg, excluding a combination of Sr and Mg and $0.00005 \leq x \leq 0.01$) or

(B)   $M'_{1-x}A_xS$ (where M' is at least one of Ca and Sr, A is Ba or a combination of Ba and Mg and $0.00005 \leq x \leq 0.01$).

18. A cathode-ray tube according to claim 17 wherein said phosphor further contains a halogen element or elements in a concentration in the range $10^{-5}$ to $10^{-1}$ gram atom per mol of the total alkaline-earth metal sulfide, and phosphorus in a concentration in the range 100 p.p.m. to 10,000 p.p.m.

19. A cathode-ray tube characterized by at least one alkaline-earth metal sulfide phosphor which is activated with at least one element selected from the lanthanides, Mn, Cu, Pb, Ag and Au applied on the inner surface of its faceplate, wherein said phosphor further contains a halogen element or elements in a concentration in the range $10^{-5}$ to $10^{-1}$ gram atom per mol of the total alkaline earth metal sulfide, and phosphorus in a concentration in the range 100 p.p.m. to 10,000 p.p.m.

20. A cathode-ray tube having at least one phosphor according to any one of claims 1 to 9 applied to the inner surface of its faceplate.


## Patentansprüche

1. Leuchtstoff bestehend aus einem Erdalkalimetallsulfid, das mit zumindest einem aus den Lanthanoiden, Mn, Cu, Ag, Pb und Au gewähltem Element aktiviert ist und das zumindest ein Halogenelement enthält, dadurch gekennzeichnet, daß der Leuchtstoff mit elementarem Phosphor mit einer Konzentration im Bereich von 100 ppm bis 10 000 ppm dotiert ist.

2. Leuchstoff nach Anspruch 1, wobei das Erdalkalimetallsulfid zumindest eines von CaS, SrS, BaS, MgS, (Ca, Sr)S und (Ca, Mg)S ist.

3. Leuchtstoff nach Anspruch 1, wobei die Konzentration des Aktivierungselements oder der Aktivierungselements $10^{-5}$ bis $10^{-2}$ Grammatom pro Mol des Erdalkalimetallsulfids beträgt.

4. Leuchtstoff nach einem der Ansprüche 1 bis 3, wobei die Konzentration des Halogenelements oder der Halogenelemente $10^{-5}$ bis $10^{-1}$ Grammatom pro Mol des Erdalkalimetallsulfids beträgt.

5. Leuchtstoff nach einem der Ansprüche 1 bis 4, wobei das Erdalkalimetallsulfid die allgemeine Formel

(A)   $M_{1-x}Ba_xS$, (worin M zumindest eines von Ca, Sr und Mg unter Ausschluß einer Kombination von Sr und Mg ist, und $0,00005 \leq x \leq 0,01$ gilt), oder

(B)   $M'_{1-x}A_xS$ hat, (worin M' zumindest eines von Ca und Sr ist, A entweder Ba oder Ba und Mg zusammen ist, und $0,00005 \leq x \leq 0,01$ gilt).

6. Leuchtstoff mit der allgemeinen Formel $M_{1-x}Ba_xS:Ln$, worin M zumindest eines von Ca, Sr und Mg unter Ausschluß einer Kombination von Sr und Mg ist, Ln zumindest ein aus den Lanthanoiden, Mn, Cu, Ag, Pb und Au gewähltes Element ist, und $0,00005 \leq x \leq 0,01$ gilt.

7. Leuchtstoff mit der allgemeinen Formel $M'_{1-x}A_xS:Ln$, worin M' zumindest eines von Ca und Sr ist, A Ba oder eine Kombination von Ba und Mg ist, Ln zumindest ein aus den Lanthanoiden, Mn, Cu, Ag, Pb und Au gewähltes Element ist, und $0,00005 \leq x \leq 0,01$ gilt.

8. Leuchtstoff nach Anspruch 6 oder Anspruch 7, wobei Ln zumindest eines von Ce und Eu ist.

9. Leuchtstoff nach einem der Ansprüche 6 bis 8, wobei die Konzentration von Ln $10^{-5}$ bis $10^{-2}$ Grammatom pro Mol des Erdalkalimetallsulfids beträgt.

10. Verfahren zur Herstellung eines Erdalkalimetallsulfid-Leuchtstoffs, der mit zumindest einem aus den Lanthanoiden, Mn, Cu, Ag, Pb und Au gewähltem Element aktiviert ist, gekennzeichnet durch Erhitzen

(a)(i)   eines Erdalkalimetallsulfids oder

(ii)   einer Erdalkalimetall-Verbindung, die zur Umsetzung in ein Sulfid geeignet ist, wenn sie zusammen mit Schwefel oder einer Schwefelverbindung erhitzt wird, und dem Verfahren entsprechend des Schwefels oder der Schwefelverbindung,

(b)   zumindest einer Verbindung des aktivierenden Elementes oder der aktivierenden Elemente,

(c)  elementaren Phosphors oder einer elementaren Phosphor liefernden Phosphorverbindung und

(d)  einer Halogenverbindung in einer $H_2S$ und/oder $H_2$ enthaltenden Atmosphäre.

11. Verfahren nach Anspruch 10, wobei das Erdalkalimetallsulfid zumindest eines von CaS, SrS, BaS, MgS, (Ca, Sr)S und (Ca, Mg)S ist.

12. Verfahren nach Anspruch 10 oder Anspruch 11, wobei das Erhitzen im Temperaturbereich von 1000°C bis 1400°C durchgeführt wird.

13. Verfahren nach einem der Ansprüche 10 bis 12, wobei die Phosphorverbindung und die Halogenverbindung von $PCl_3$, $PF_5$ oder $PF_3$ dargestellt werden.

14. Verfahren nach einem der Ansprüche 10 bis 13, wobei das Erdalkalimetallsulfid die allgemeine Formel

(A)  $M_{1-x}Ba_xS$ (worin M zumindest eines von Ca, Sr und Mg unter Ausschluß einer Kombination von Sr und Mg ist, und $0,00005 \leq x \leq 0,01$ gilt) oder

(B)  $M'_{1-x}A_xS$ hat, (worin M' zumindest eines von Ca und Sr ist, A Ba oder Ba verbunden mit Mg ist, und $0,00005 \leq x \leq 0,01$ gilt).

15. Verfahren zur Herstellung eines Leuchtstoffes nach einem der Ansprüche 6 bis 9, gekennzeichnet durch Erhitzen

(a)(i)  eines Erdalkalimetallsulfids oder

(ii)  einer Erdalkalimetall-Verbindung, die zur Umsetzung in ein Sulfid geeignet ist, wenn sie zusammen mit Schwefel oder einer Schwefelverbindung erhitzt wird, und dem Verfahren entsprechend des Schwefels oder der Schwefelverbindung und

(b)  zumindest einer aus den Verbindungen der Lanthanoidelemente, Mn, Cu, Ag, Pb und Au gewählten Verbindung.

16. Verfahren nach Anspruch 15, wobei die Erhitzung im Temperaturbereich von 1000°C bis 1400°C durchgeführt wird.

17. Kathodenstrahlröhre, gekennzeichnet durch zumindest einen Erdalkalimetallsulfid-Leuchtstoff, der mit zumindest einen aus den Lanthanoiden, Mn, Cu, Pb, Ag und Au gewähltem Element aktiviert und auf die innere Oberfläche des Röhren-Schirmträgers aufgebracht ist, wobei das Erdalkalimetallsulfid die allgemeine Formel

(A)  $M_{1-x}Ba_xS$ (worin M zumindest eines von Ca, Sr und Mg unter Ausschluß einer Kombination von Sr und Mg ist, und $0,00005 \leq x \leq 0,01$ gilt) oder

(B)  $M'_{1-x}A_xS$ hat, (worin M' zumindest eines von Ca und Sr ist, A Ba oder eine Kombination von Ba und Mg ist, und $0,00005 \leq x \leq 0,01$ gilt).

18. Kathodenstrahlröhre nach Anspruch 17, wobei der Leuchtstoff weiterhin ein Halogenelement oder Halogenelemente in einer Konzentration im Bereich von $10^{-5}$ bis $10^{-1}$ Grammatom pro Mol des gesamten Erdalkalimetallsulfids und Phosphor in einer Konzentration im Bereich von 100 ppm bis 10 000 ppm enthält.

19. Kathodenstrahlröhre, gekennzeichnet durch zumindest einen Erdalkalimetallsulfid-Leuchtstoff, der mit zumindest einem aus den Lanthanoiden, Mn, Cu Pb, Ag und Au gewähltem Element aktiviert und auf die innere Oberfläche des Röhren-Schirmträgers aufgebracht ist, wobei der Leuchtstoff weiterhin ein Halogenelement oder Halogenelemente in einer Konzentration im Bereich von $10^{-5}$ bis $10^{-1}$ Grammatom pro Mol des gesamten Erdalkalimetallsulfids und Phosphor in einer Konzentration im Bereich von 100 ppm bis 10 000 ppm enthält.

20. Kathodenstrahlröhre mit zumindest einem Leuchtstoff nach einem der Ansprüche 1 bis 9, der auf die innere Oberfläche des Röhren-Schirmträgers aufgebracht ist.

**Revendications**

1. Substance luminescente contenant un sulfure d'un métal alcalino-terreux, qui est activée par au moins un élément choisi parmi les lanthanides, Mn, Cu, Ag, Pb et Au et qui contient au moins un élément halogène, caractérisée en ce que la substance luminescente est dopée par du phosphore élémentaire en une concentration située dans la plage située entre 100 ppm et 10000 ppm.

2. Substance luminescente selon la revendication 1, dans laquelle ledit sulfure de métal alcalino-terreux est au moins l'un des suivants: CaS, SrS, BaS, MgS, (Ca, Sr)S et (Ca, Mg)S.

3. Substance luminescente selon la revendication 1, dans laquelle la concentration du ou des éléments activateurs est comprise entre $10^{-5}$ et $10^{-2}$ atome-gramme par mole dudit sulfure de métal alcalino-terreux.

4. Substance luminescente selon l'une quelconque des revendications 1 à 3, dans laquelle la concentration du ou desdits éléments halogènes est comprise entre $10^{-5}$ et $10^{-1}$ atome-gramme par mole dudit sulfure de métal alcalino-terreux.

## O 030 853

5. Substance luminescente selon l'une quelconque des revendications 1 à 4, dans laquelle ledit sulfure de métal alcalino-terreux possède la formule générale

(A) $M_{1-x}Ba_xS$ (où M est au moins l'un des éléments Ca, Sr et Mg, à l'exclusion d'une combinaison de Sr et Mg, et $0,00005 \leq X \leq 0,01$), ou

(B) $M'_{1-x}A_xS$ (où M' est au moins l'un des éléments Ca et Sr, A est du Ba ou du Ba et du Mg ensemble et $0,00005 \leq x \leq 0,01$).

6. Substance luminescente possédant la formule générale $M_{1-x}Ba_xS:Ln$, dans laquelle M est au moins l'un des éléments Ca, Sr, et Mg, à l'exclusion d'une combinaison de Sr et de Mg, Ln est au moins un élément sélectionné parmi les lanthanides Mn, Cu, Ag, Pb et Au et $0,00005 \leq x \leq 0,01$.

7. Substance luminescente possédant la formule générale $M'_{1-x}A_xS:Ln$, dans laquelle M' est au moins l'un des éléments Ca et Sr, A est du Ba ou une combinaison de Ba et Mg, Ln est au moins un élément sélectionné parmi les lanthanides, Mn, Cu, Ag, Pb et Au et $0,00005 \leq x \leq 0,01$.

8. Substance luminescente selon la relvendication 6 ou 7, dans laquelle Ln est au moins l'un des élé- Ce et Eu.

9. Substance luminescente selon l'une quelconque des revendications 6 à 8, dans laquelle la concentration de Ln est comprise entre $10^{-5}$ et $10^{-2}$ atome-gramme par mole de sulfure de métal alcalino-terreux.

10. Procédé de fabrication d'une substance luminescente formée d'un sulfure d'un métal alcalino-terreux, qui est activée par au moins un élément choisi parmi les lanthanides, Mn, Cu, Ag, Pb et Au, caractérisée par le chauffage, dans une atmosphère contenant du $H_2S$ et/ou du $H_2$,

(a)(i)   d'un sulfure de métal alcalino-terreux, ou

  (ii)   d'un composé de métal alcalino-terreux apte à se transformer en un sulfure lorsqu'il est chauffé en association avec du soufre ou un composé de soufre, et du soufre ou le composé de soufre comme cela est approprié,

(b)   au moins un composé du ou desdits éléments activateurs,

(c)   du phosphore élémentaire ou un composé de phosphore fournissant du phosphore élémentaire,

(d)   un composé d'halogène.

11. Procédé selon la revendication 10, selon lequel ledit sulfure d'un métal alcalino-terreux est au moins l'un des suivants: CaS, SrS, BaS, MgS, (Ca, Sr)S et (Ca, Mg)S.

12. Procédé selon la revendication 10 ou 11, selon lequel le chauffage est effectué dans la gamme de température entre 1000°C et 1400°C.

13. Procédé selon l'une quelconque des revendications 10 à 12, selon lequel le composé de phosphore et le composé d'halogène sont représentés par $PCl_3$, $PF_5$, ou $PF_3$.

14. Procédé selon l'une quelconque des revendications 10 à 13, selon lequel ledit sulfure de métal alcalino-terreux possède la formule générale

(A) $M_{1-x}Ba_xS$ (où M est au moins l'un des éléments Ca, Sr, et Mg, à l'exclusion d'une combinaison de Sr et de Mg et $0,00005 \leq x \leq 0,01$) ou

(B) $M'_{1-x}A_xS$ (où M' est ou moins l'un des éléments Ca et Sr, A est du Ba ou du Ba combiné avec du Mg, et $0,00005 \leq x \leq 0,01$).

15. Procédé de fabrication d'une substance luminescente selon l'une quelconque des revendications 6 à 9, caractérisé par le chauffage:

(a)(i)   d'un sulfure de métal alcalino-terreux, ou

  (ii)   d'un composé de métal alcalino-terreux apte à se transformer en un sulfure lorsqu'il est chauffé en association avec du soufre ou un composé de soufre, et du soufre ou du composé de soufre comme cela est approprié, et

(b)   d'au moins un composé choisi parmi les composés des éléments lanthanides, Mn, Cu, Ag, Pb et Au.

16. Procédé selon la revlendication 15, selon lequel le chauffage est effectué dans une gamme de température entre 1000°C et 1400°C.

17. Tube cathodique, caractérisé par au moins une substance luminescente formée par un sulfure d'un métal alcalino-terreux, qui est activée par au moins un élément choisi parmi les lanthanides Mn, Cu, Cb, Ag et Au, et qui est appliqué sur la surface intérieure de la plaque avant du tube, le sulfure de métal a'calino-terreux possédant la formule générale

(A) $M_{1-x}Ba_xS$ (où M est au moins l'un des éléments Ca Sr et Mg, à l'exclusion d'une combinaison de Sr et de Mg, et $0,00005 \leq x \leq 0,01$) ou

(B) $M'_{1-x}A_xS$ (où M' est au moins l'un des éléments Ca et Sr, A est du Ba ou une combinaison de Ba et de Mg et $0,00005 \leq x \leq 0,01$).

14

**0 030 853**

18. Tube cathodique selon la revendication 17, dans lequel ladite substance luminescente contient en outre un ou des éléments halogènes en une concentration située dans la gamme de $10^{-5}$ à $10^{-1}$ atome-gramme par mole de la totalité du sulfure du métal alcalino-terreux, et le phosphore est présent en une concentration dans la gamme allant de 100 ppm à 10000 ppm.

19. Tube cathodique caractérisé par au moins une substance luminescente à base de sulfure d'un métal alcalino-terreux, qui est activée par au moins un élément choisi parmi les lanthanides Mn, CU, Pb, Ag et Au et qui est appliquée sur la surface intérieure de la plaque avant du tube, ladite substance luminescente contenant en outre un ou des éléments halogènes en une concentration située dans la gamme de $10^{-5}$ à $10^{-1}$ atome-gramme par mole de la totalité du sulfure du métal alcalino-terreux et du phosphore en une concentration située dans la gamme allant de 100 ppm à 10000 ppm.

20. Tube cathodique comportant au moins une substance luminescente selon l'une quelconque des revendications 1 à 9, appliquée sur la surface intérieure de sa plaque avant.

15

FIG. 1

FIG. 2

FIG. 3

0 030 853

FIG. 4

0 030 853

FIG. 5

FIG. 6

LUMINESCENCE INTENSITY ( ARBITRARY UNIT )

WAVELENGTH ( nm )

0 030 853

FIG. 7

0 030 853

FIG. 8

FIG. 9

## FIG. 10

## FIG. 11

FRACTION OF VOLUME y ( atom/atom)

FIG. 12

FIG. 13

21'

24

25

23'

RELATIVE INTENSITY

10

5

0

0

50

100

150

200

TEMPERATURE (°C)

FIG. 14